# EUROPEAN PATENT APPLICATION

(11) **EP 4 398 462 A1**
(43) Date of publication of application: **10.07.2024**
(21) Application number: 24150675.7
(22) Date of filing: 08.01.2024
(51) Int. Cl.: H02K 9/193, H02K 1/20, H02K 5/20

(54) **STATOR COOLING STRUCTURE OF A MOTOR**

(30) Priority: 09.01.2023 US 202363478990 P; 04.09.2023 CN 202311132257
(71) Applicant: Delta Electronics, Inc., Taoyuan City 333 (TW)
(72) Inventor: CHOU, Mu-Hsien, Taoyuan City 333 (TW); TSAI, Shian-Min, Taoyuan City 333 (TW); SU, Yu-Lin, Taoyuan City 333 (TW)
(74) Representative: Riccardi, Elisa

(57) **Abstract**

A motor stator cooling structure (100) includes a first stator bracket (120), a stator body (110) and a second stator bracket (130). Said first stator bracket includes an oil inlet, a single, annular first bracket cooling channel and first nozzles. Said second stator bracket includes second nozzles and second bracket cooling channels that are not connected to each other. The stator cooling channels are not connected to each other but are connected to the first bracket cooling channel at the first axial end of the stator body and to the second bracket cooling channels at the second axial end of the stator body. Wherein first nozzles face stator windings (112a) at said first axial end and second nozzles face stator windings (112b) at said second axial end.

## Description

### BACKGROUND

### Field of Invention

The present disclosure relates to a motor stator cooling structure, and more particularly to a motor stator oil-cooled or liquid-cooled structure.

### Description of Related Art

A conventional cooling oil circulation channel in a motor stator has disadvantages of poor cooling performance and uneven temperature distribution. In view of such issue, motor manufacturers are actively looking for solutions to effectively improve the heat dissipation effect of the motor stator body and its stator windings and enhance the performance of the motor.

### SUMMARY

The present disclosure proposes a motor stator cooling structure for overcoming or alleviating the problems of the prior art.

In one or more embodiments, a motor stator cooling structure includes a first stator bracket, a second stator bracket and a stator body. The first stator bracket includes an oil inlet, a plurality of first nozzles and an annular first bracket cooling channel, and the oil inlet and the first nozzles are all connected to the first bracket cooling channel to be fluidly communicable. The second stator bracket includes a plurality of second nozzles and a plurality of second bracket cooling channels that are not connected to each other, and the second nozzles are connected to the second bracket cooling channels respectively to be fluidly communicable. The stator body inlcudes a plurality of stator cooling channels that are not connected to each other, wherein the stator cooling channels are arranged around an outer circumference of the stator body in a circumferential direction and each stator cooling channel penetrates through the stator body, and the stator cooling channels are connected to the first bracket cooling channel at a first side of the stator body in an axial direction and connected to the second bracket cooling channels respectively at a second side of the stator body in the axial direction. The first nozzles face stator windings at the first side of the stator body, and the second nozzles face stator windings at the second side of the stator body.

The motor stator cooling structure disclosed herein utilized multiple fluid-communicably connected cooling channels and nozzles in the stator body, first stator bracket and second stator bracket such that the overall motor stator can be cooled more efficiently and evenly, and the stator coil windings can be simultaneously cooled by the nozzles.

It is to be understood that both the foregoing general description and the following detailed description are by examples, and are intended to provide further explanation of the invention as claimed.

### BRIEF DESCRIPTION OF THE DRAWINGS

The invention can be more fully understood by reading the following detailed description of the embodiment, with reference made to the accompanying drawings as follows:
Fig. 1 illustrates a perspective view of a motor stator cooling structure according to some embodiments of the present disclosure;
Fig. 2 illustrates an exploded view of the motor stator cooling structure in Fig. 1;
Fig. 3 illustrates a cross-sectional view of a motor cooling system according to some embodiments of the present disclosure;
Fig. 4 illustrates a planar view of a stator body of the motor in Fig. 2;
Fig. 5 illustrates a first perspective view of a first stator bracket according to some embodiments of the present disclosure;
Fig. 6 illustrates a second perspective view of the first stator bracket in Fig. 5;
Fig. 7 illustrates a first perspective view of a second stator bracket according to some embodiments of the present disclosure; and
Fig. 8 illustrates a second perspective view of the second stator bracket in Fig. 7.

### DETAILED DESCRIPTION

Reference will now be made in detail to the present embodiments, examples of which are illustrated in the accompanying drawings. Wherever possible, the same reference numbers are used in the drawings and the description to refer to the same or like parts.

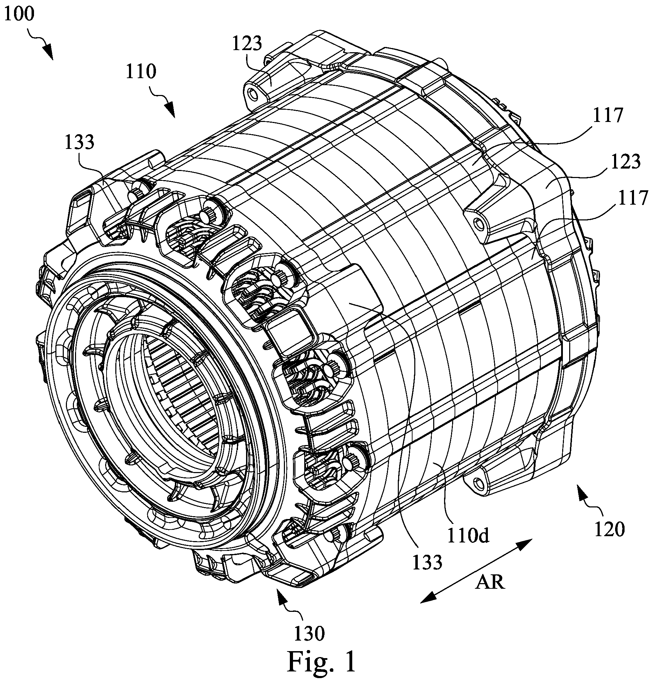

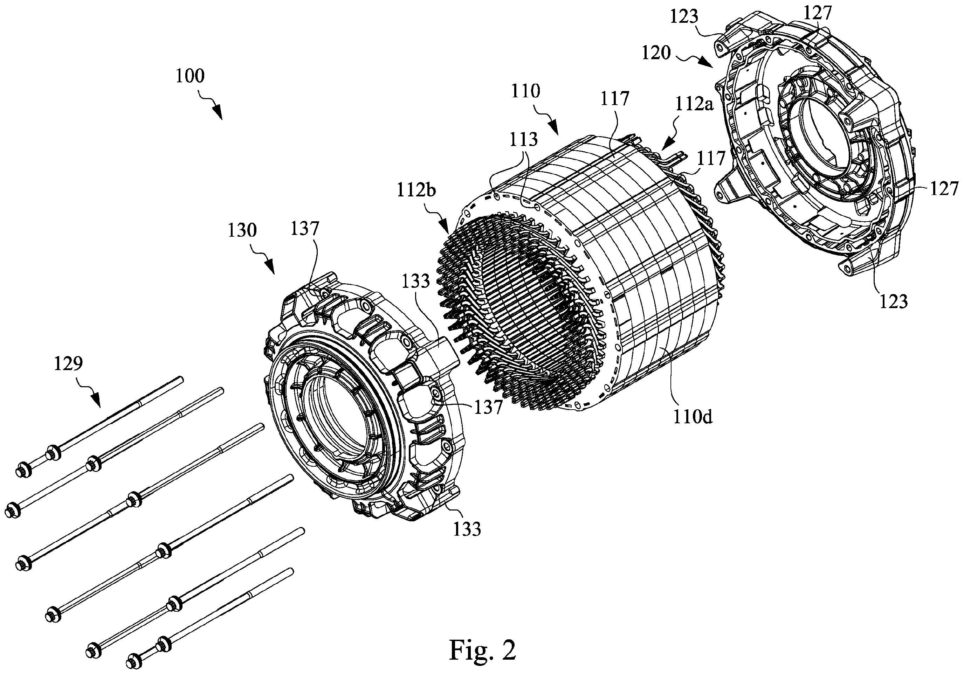

Reference is made to Figs. 1 and 2, Fig. 1 illustrates a perspective view of a motor stator cooling structure according to some embodiments of the present disclosure, and Fig. 2 illustrates an exploded view of the motor stator cooling structure in Fig. 1. The motor stator cooling structure 100 includes a stator body 110, a first stator bracket 120 and a second stator bracket 130. The stator body 110 has a first side and a second side in an axial direction AR. The first stator bracket 120 is assembled and connected to the first side of the stator body 110 to cool stator windings 112a arranged at the first side of the stator body 110, wherein these stator windings 112a partially protrude from the stator body 110 and are covered by the first stator bracket 120. The second stator bracket 130 is assembled and connected to the second side of the stator body 110 to cool stator windings 112b arranged at the second side of the stator body 110, wherein the stator windings 112b partially protrude from the stator body 110 and are covered by the second stator bracket 130. This configuration causes the stator windings 112a and 112b on both sides of the stator body 110 to be sprayed and cooled by the cooling oil output from multiple nozzles of the first and second stator brackets 120 and 130 to improve cooling efficiency, and the nozzle configuration is explained later. The first stator bracket 120 includes a plurality of first positioning posts 123. When the first stator bracket 120 is connected to the stator body 110 at the first side, the first positioning posts 123 abut a side edge of a circumferential outer wall 110d of the stator body 110. The second stator bracket 130 also includes a plurality of second positioning posts 133. When the second stator bracket 130 is connected to the stator body 110 at the second side, the second positioning posts 133 abut another side edge of the circumferential outer wall 110d of the stator body 110. In some embodiments of the present disclosure, the first stator bracket 120 includes four first positioning posts 123 arranged approximately around the circumferential direction, and the second stator bracket 130 also includes four second positioning posts 133 approximately arranged around the circumferential direction, and the four first positioning posts 123 are aligned with the four second positioning posts 133 respectively in the axial direction AR. A plurality of axial protrusions 117 are arranged on the circumferential outer wall 110d of the stator body 110 along the circumferential direction and extends from the the first side to the second side. The axial protrusions 117 protrude from the stator body 110 in a radial direction, which has a strengthening effect for the structure of the stator body 110. When the first stator bracket 120 is connected to the stator body 110, each first positioning post 123 is located between corresponding two immediately-adjacent axial protrusions 117 on the circumferential outer wall 110d, i.e., each of the first positioning posts 123 is immediately-adjacent to two axial protrusions 117 in the circumferential direction. When the second stator bracket 130 is connected to the stator body 110, each second positioning post 133 is located between corresponding two immediately-adjacent axial protrusions 117 on the circumferential outer wall 110d, i.e., each of the second positioning posts 133 is immediately-adjacent to two axial protrusions 117 in the circumferential direction. Therefore, when assembled, the first stator bracket 120 is firmly positioned at the first side of the stator body 110 in the circumferential direction by the first positioning posts 123, and when assembled, the second stator bracket 130 is firmly positioned at the second side of the stator body 110 in the circumferential direction by the second positioning posts 133. At this time, the four first positioning posts 123 are aligned with the four second positioning posts 133 respectively in the axial direction AR, which facilitates using corresponding plurality of fasteners 129 for respectively threading and locking. The first stator bracket 120 contains a plurality of first bracket assembly holes 127, and the second stator bracket 130 contains a plurality of second bracket assembly holes 137. A plurality of fasteners 129 secure the first stator bracket 120 and the second stator bracket 130 to the first and second sides of the stator body 110 respectively through the first and second bracket assembly holes 127, 137 and the corresponding stator assembly holes 113. In some embodiments of the present disclosure, a plurality of stator assembly holes 113 penetrate through the stator body 110, and the stator body 110 protrudes radially from the stator assembly holes 113 correspondingly to form a plurality of axial protrusions 117, i.e., the axial protrusions 117 are aligned with the stator assembly holes 113 respectively in the radial direction.

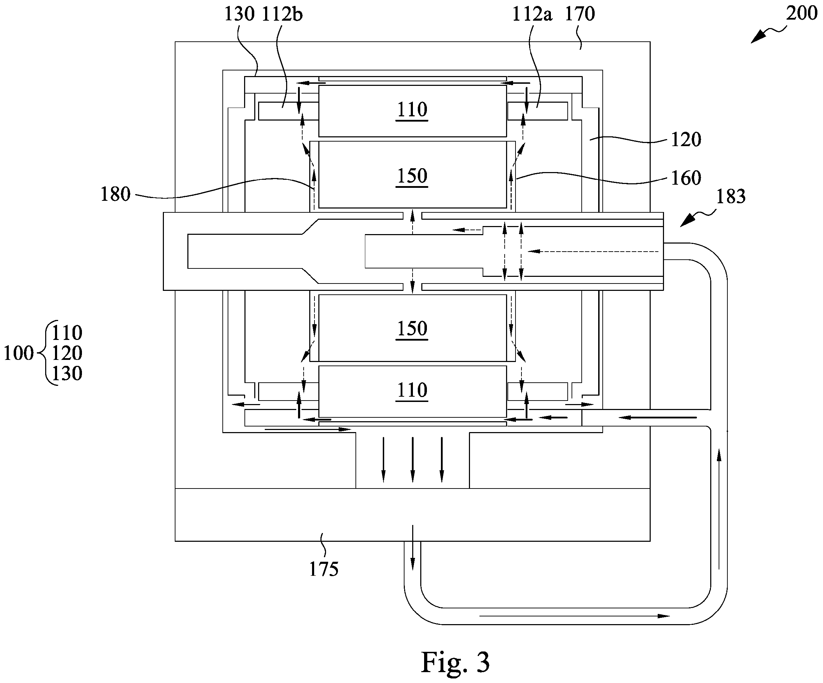

Reference is made to Fig. 3, which illustrates a cross-sectional view of a motor cooling system according to some embodiments of the present disclosure. The motor cooling system 200 includes an outer casing 170 to cover the motor stator cooling structure 100 and the motor rotor cooling structure 150. This Figure shows the flow directions of the cooling oil circulated within the motor cooling system 200. Regarding the motor rotor cooling structure 150, cooling oil flow directions are indicated by the dotted arrows, entering from a rotating shaft 183, distributed to the end plates (160, 180) on both sides of the rotor through the internal flow channel, and then output from the nozzles of the end plates (160, 180) to the stator windings 112a and 112b on both sides of the stator body 110. Regarding the motor stator cooling structure 100, cooling oil flow directions are indicated by thick arrows, entering from an oil inlet of the first stator bracket 120, and part of the cooling oil is output to the stator windings 112a at the first side of the stator body 110 through the nozzles of the first stator bracket 120, and another part of the cooling oil is distributed to the second stator bracket 130 through the stator cooling channels of the stator body 110, and then output to the stator windings 112b at the second side of the stator body 110 through the nozzles of the second stator bracket 130. The stator windings 112a and 112b on two opposite sides of the stator body 110 are sprayed and dissipated simultaneously by the cooling oil output by the nozzles of the end plates (160, 180), the nozzles of the first stator bracket 120, and the nozzles of the second stator bracket 130 to achieve a high efficiency heat dissipation. The cooling oil output through the nozzles is finally collected and recycled through the oil collection pan 175 below the outer casing 170. After being processed and cooled, the cooling oil can be recycled and sent back to the motor stator cooling structure 100 and motor rotor cooling structure 150 for the next heat dissipation cycle.

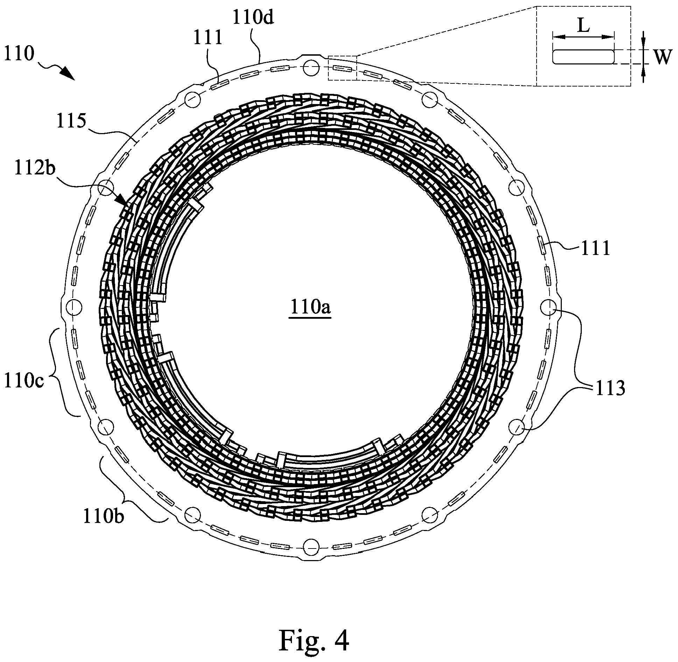

Reference is made to Fig. 4, which illustrates a planar view of a stator body of the motor in Fig. 2. The first and second sides of the stator body 110 are basically the same except for slight differences in the shapes of the stator windings 112a and 112b. Therefore, only one side of the stator body 110 is shown, e.g., the second side of the stator windings 112b is shown in Fig. 4, but not being limited therein. The stator body 110 has a plurality of stator cooling channels 111 that are not (fluid-communicably) connected to each other. These stator cooling channels 111 penetrate the stator body 110 in the axial direction, and are arranged in the circumferential direction close to an outer circumference of the stator body 110, i.e., away from a axis position. In some embodiments of the present disclosure, the stator body 110 includes a plurality of stator assembly holes 113 on both the first side and the second side, and the stator cooling channels 111 have a plurality of openings on the first side of the stator body 110. The stator assembly holes 113 and the openings of the stator cooling channels 111 on the first side of the stator body 110 are located on the same circle (i.e., the dotted circle 115 in Fig. 4). Similarly, the stator assembly holes 113 and the openings of the stator cooling channels 111 on the second side of the stator body 110 are located on the same circle (not shown in the figure, but similar to the dotted circle 115 in Fig. 4). That is, the stator cooling channels 111 are parallel to each other in the axial direction, arranged in the circumferential direction, and penetrate the stator body 110, and are spaced from stator assembly holes 113 in the circumferential direction. A rotor accommodating space 110a defined in the center of the stator body 110 can accommodate the motor rotor cooling structure 150 therein (referring to Fig. 3). In some embodiments of the present disclosure, there are at least two stator cooling channels 111 located between two immediately-adjacent stator assembly holes 113. For example, the section 110b has two stator cooling channels 111 between two immediately-adjacent stator assembly holes 113, and the section 110c has three stator cooling channels 111 between two immediately-adjacent stator assembly holes 113. In some embodiments of the present disclosure, the stator body 110 has four sections 110b, and the side edges of the circumferential outer walls 1 10d of the four sections 110b are in contact with the four first positioning posts 123 of the first stator bracket 120 and the four second positioning posts 133 of the second stator bracket 130. In some embodiments of the present disclosure, the stator cooling channels 111 of the stator body 110 have the same or substantially the same dimensions and shapes, e.g., rectangular openings of the stator cooling channels 111 have an equal length L and an equal width W, where the length L is larger than the width W, and is three times more than the width W such that the stator cooling channels 111 is more suitable for being arranged close to the outer circumference of the stator body 110.

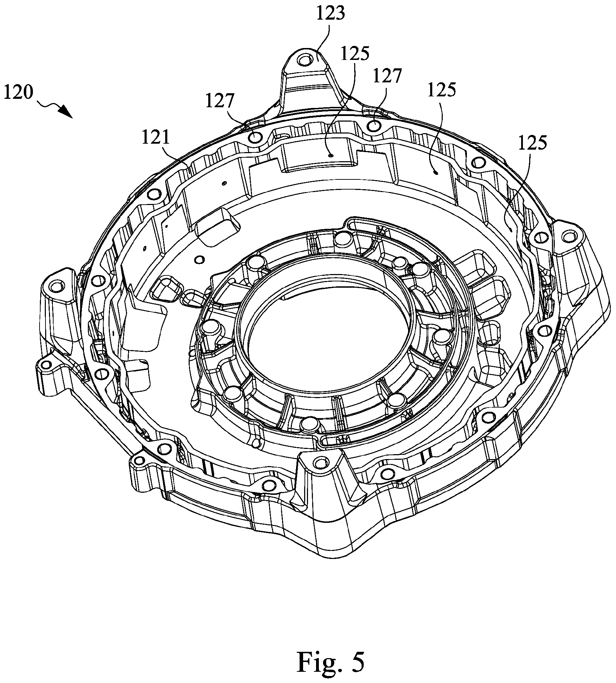

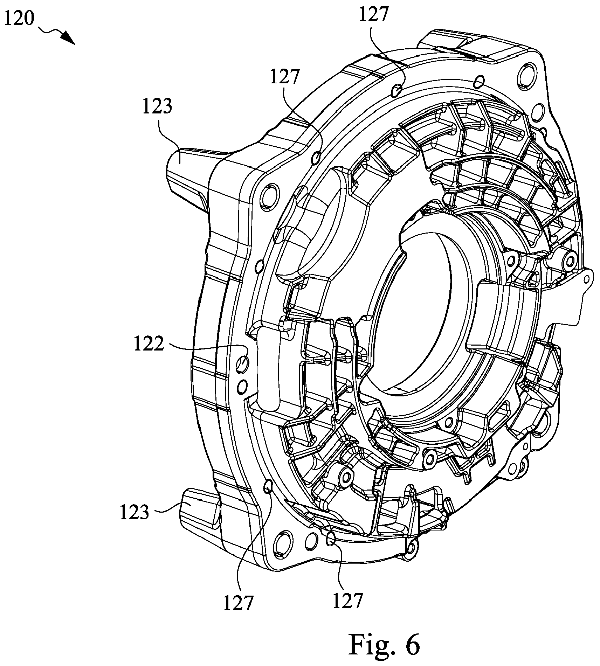

Reference is made to Figs. 5 and 6, Fig. 5 illustrates a first perspective view of a first stator bracket according to some embodiments of the present disclosure, and Fig. 6 illustrates a second perspective view of the first stator bracket in Fig. 5. The first stator bracket 120 is configured to be connected to the first side of the stator body 110. The first stator bracket 120 is roughly a disc structure with a certain depth. A side facing the stator body 110 is recessed to form an annular and continuous first bracket cooling channel 121. The first bracket cooling channel 121 is formed to avoid positions of bracket assembly holes 127 in the radial direction, such as reducing the width of the flow channel in positions where encountering the first bracket assembly holes 127, or detouring in the radial direction in positions where encountering the first bracket assembly holes 127. The first stator bracket 120 also includes a plurality of first nozzles 125. The first nozzles 125 are located at one side of the first stator bracket 120 facing the stator body 110 and are all connected to the first bracket cooling channel 121 to be fluidly communicable. When the first stator bracket 120 is connected to the first side of the stator body 110, the first bracket cooling channel 121 is connected to the stator cooling channels 111 of the stator body 110 to be fluidly communicable, and the first nozzles 125 are arranged toward the stator windings 112a on the first side of the stator body 110 (please also refer to Fig. 2) to output the cooling oil for the heat dissipation of the stator windings 112a. In some embodiments, the first nozzles 125 are located at an inner side edge of the first stator bracket 120 and have radial openings (i.e., opening is directed along an radial direction) to ensure that the cooling oil is output to the stator windings 112a. The first stator bracket 120 has an oil inlet 122 on the other side facing away from the stator body 110, and the oil inlet 122 is connected to the first bracket cooling channel 121 to be fluidly communicable for inputting cooling oil.

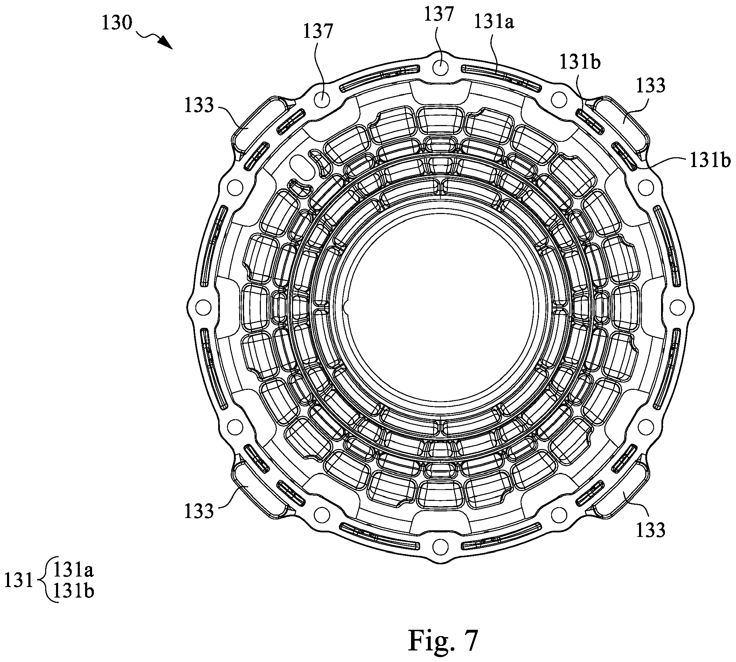

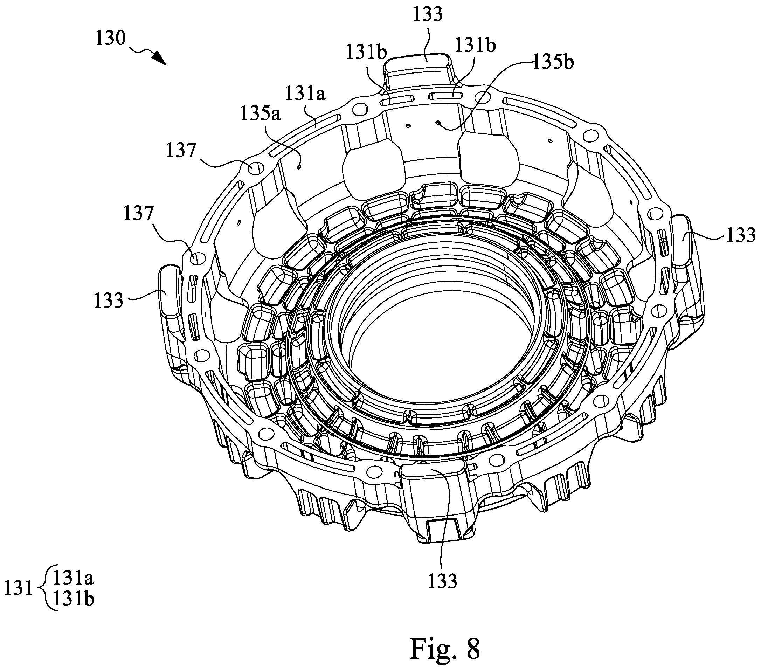

Reference is made to Figs. 7 and 8, Fig. 7 illustrates a first perspective view of a second stator bracket according to some embodiments of the present disclosure, and Fig. 8 illustrates a second perspective view of the second stator bracket in Fig. 7. The second stator bracket 130 is configured to be connected to the second side of the stator body 110. The second stator bracket 130 is generally a disc structure and includes a plurality of second nozzles (135a, 135b) and a plurality of second bracket cooling channels 131 that are not (fluid-communicably) connected to each other. When the second stator bracket 130 is connected to the second side of the stator body 110, and the second bracket cooling channels 131 are connected to the stator cooling channels 111 of the stator body 110 respectively, and the second nozzles (135a, 135b) face the stator windings 112b arranged at the second side of the stator body 110 (please also refer to Fig. 2), so as to output the cooling oil for the heat dissipation of the stator windings 112b. The second bracket cooling channels 131 includes a plurality of long arc-shaped flow channels 131a that are not (fluid-communicably) connected to each other and a plurality of short arc-shaped flow channels 131b that are not (fluid-communicably) connected to each other. The long arc-shaped flow channels 131a have the same or similar shaped cross-sections, and the short arc-shaped flow channels 131b also have the same or similar shaped cross-sections. In some embodiments of the present disclosure, there is one long arc-shaped flow channel 131a between two immediately-adjacent second bracket assembly holes 137, and there are two non-connected immediately-adjacent short arc-shaped flow channels 131b between two immediately-adjacent second bracket assembly holes 137. The second stator bracket 130 includes four second positioning posts 133. Each second positioning post 133 is aligned or overlapped with two immediately-adjacent short arc-shaped flow channels 131b in the radial direction, which both can take into account the output of the cooling oil and the structural strength of the second stator bracket 130. In some embodiments of the present disclosure, each long arc-shaped flow channel 131a has a corresponding second nozzle 135a, and every immediately-adjacent two short arc-shaped flow channels 131b has two corresponding second nozzles 135b. In some embodiments, the second nozzles (135a, 135b) are located at the inner side edges of the second stator bracket 130 and have radial openings to ensure cooling oil output to the stator windings 112b.

The motor stator cooling structure disclosed herein utilized multiple fluid-communicably connected cooling channels and nozzles in the stator body, first stator bracket and second stator bracket such that the overall motor stator can be cooled more efficiently and evenly, and the stator coil windings can be simultaneously cooled by the nozzles.

## Claims

1. A motor stator cooling structure (100), comprising:
a first stator bracket (120) comprising an oil inlet (122), a plurality of first nozzles (125) and an annular first bracket cooling channel (121), the oil inlet (122) and the first nozzles (125) are all connected to the first bracket cooling channel (121);
a second stator bracket (130) comprising a plurality of second nozzles (135a, 135b) and a plurality of second bracket cooling channels (131) that are not connected to each other, and the second nozzles (135a, 135b) are connected to the second bracket cooling channels (131) respectively; and
a stator body (110) comprising a plurality of stator cooling channels (111) that are not connected to each other, wherein the stator cooling channels (111) are arranged around an outer circumference of the stator body (110) in a circumferential direction and each stator cooling channel (111) penetrates through the stator body (110), and the stator cooling channels (111) are connected to the first bracket cooling channel (121) at a first side of the stator body (110) in an axial direction (AR) and connected to the second bracket cooling channels (131) respectively at a second side of the stator body (110) in the axial direction (AR),
wherein the first nozzles (125) face stator windings at the first side of the stator body (110), and the second nozzles (135a, 135b) face stator windings at the second side of the stator body (110).

2. The motor stator cooling structure (100) of claim 1, wherein the stator body (110) comprises a plurality of stator assembly holes (113) at the first side and the second side respectively, and the stator cooling channels (111) comprise a plurality of openings on the first side that are spaced apart from the stator assembly holes (113) in the circumferential direction, the stator cooling channels (111) comprise a plurality of openings on the second side that are spaced apart from the stator assembly holes (113) in the circumferential direction.

3. The motor stator cooling structure (100) of claim 2, wherein at least two of the stator cooling channels (111) are disposed between any immediately-adjacent two of the stator assembly holes (113).

4. The motor stator cooling structure (100) of claim 2, wherein the first stator bracket (120) and the second stator bracket (130) both comprise a plurality of bracket assembly holes (127, 137) and a plurality of fasteners (129), the first stator bracket (120) and the second stator bracket (130) are secured to the first side and the second side of the stator body (110) respectively by the fasteners (129) being fastened through the bracket assembly holes (127, 137) into the corresponding stator assembly holes (113).

5. The motor stator cooling structure (100) of claim 1, wherein the first stator bracket (120) comprises a plurality of first positioning posts (123) that abut a first side edge of an circumferential outer wall of the stator body (110) when the first stator bracket (120) is connected to the first side of the stator body (110), and the second stator bracket (130) comprises a plurality of second positioning posts (133) that abut a second side edge of the circumferential outer wall of the stator body (110) when the second stator bracket (130) is connected to the second side of the stator body (110), and the second positioning posts (133) are aligned with the first positioning posts (123) in the axial direction (AR) respectively.

6. The motor stator cooling structure (100) of claim 1, wherein the second bracket cooling channels (131) comprise a plurality of long arc-shaped flow channels (131a) and a plurality of short arc-shaped flow channels (131b), the second stator bracket (130) compries a plurality of bracket assembly holes (127), one of the long arc-shaped flow channels (131a) or immediately-adjacent two of the short arc-shaped flow channels (131b) are disposed between any immediately-adj acent two of the bracket assembly holes (127), and the short arc-shaped flow channels (131b) and the long arc-shaped flow channels (131a) are connected to the second nozzles (135b, 135a) respectively.

7. The motor stator cooling structure (100) of claim 6, wherein the first stator bracket (120) comprises a plurality of first positioning posts (123), the second stator bracket comprises a plurality of second positioning posts (133), the second positioning posts (133) are aligned with the first positioning posts (123) in the axial direction (AR) respectively, and the second positioning posts (133) are aligned with the short arc-shaped flow channels (131b) in a radial direction.

8. The motor stator cooling structure (100) of claim 1, wherein the stator body (110) has a plurality of axial protrusions (117), which are arranged on an circumferential outer wall of the stator body (110) in the circumferential direction and extend from the first side to the second side of the stator body (110), and protrude from the stator body (110) in a radial direction.

9. The motor stator cooling structure (100) of claim 8, wherein the first stator bracket (120) comprises a plurality of first positioning posts (123), the second stator bracket (130) comprises a plurality of second positioning posts (133), each first positioning post (123) is disposed between corresponding immediately-adjacent two of the axial protrusions (117) when the first stator bracket (120) is connected to the stator body (110), each second positioning post (133) is disposed between corresponding immediately-adjacent two of the axial protrusions (117) when the second stator bracket (130) is connected to the stator body (110).

10. The motor stator cooling structure (100) of claim 9, wherein the stator body (110) comprises a plurality of stator assembly holes (113) on both the first side and the second side, the stator assembly holes (113) penetrate through the stator body (110), and the axial protrusions (117) are aligned with the stator assembly holes (113) respectively in the radial direction.

11. The motor stator cooling structure (100) of claim 1, wherein the first stator bracket (120), the second stator bracket (130) and the stator body (110) are wrapped in an outer casing, which comprises an oil collection pan for recycling a cooling oil output from the first nozzles (125) and the second nozzles (135a, 135b).

12. The motor stator cooling structure (100) of claim 1, wherein the stator windings partially protrude from the first side and the second side and are covered by the first stator bracket (120) and the second stator bracket (130), wherein the first nozzles (125) and the second nozzles (135a, 135b) are located at inner sides of the first stator bracket (120) and of the second stator bracket (130) respectively and have radial openings.
